# EUROPEAN PATENT APPLICATION

(11) **EP 4 583 527 A1**
(43) Date of publication of application: **09.07.2025**
(21) Application number: 24150640.1
(22) Date of filing: 08.01.2024
(51) Int. Cl.: H04N 23/74, H04N 23/56

(54) **LAMP MODULE AND MONITORING SYSTEM COMPRISING THE LAMP MODULE**

(71) Applicant: faytech AG, 37213 Witzenhausen (DE)
(72) Inventor: WEBER, Arne, 37213 Witzenhausen (DE); REUTER, Michael, 37213 Witzenhausen (DE)
(74) Representative: Ter Meer Steinmeister & Partner

(57) **Abstract**

The present disclosure relates to a lamp module including: at least one illumination module configured to illuminate an environment of the lamp module, at least one capturing unit configured to capture image data of the environment, and a processing unit configured to perform image processing on the captured image data, and based on a result of the image processing, control the illumination module, and/or control the capturing unit and/or communicate with a central processing unit of a monitoring system including the lamp module. Furthermore, the present disclosure provides a monitoring system including the lamp module.

## Description

The present invention relates to a lamp module and a monitoring system comprising the lamp module.

### Technical background

Applications of monitoring within an environment, such as a building, a space or a room, have seen widespread use in recent times. Examples include monitoring people, such as monitoring the people's behavior in a shopping mall, a store such as a grocery store, a supermarket or the like. In particular, monitoring systems enable automatic checkout within a store by using computer vision. Such monitoring often involves object recognition which often requires large amounts of image data to be captured and large processing power to process said image data. Moreover, monitoring an industrial process, such as a manufacturing process, may also include object recognition.

Simultaneously, many of these applications require illumination of the environment. Therefore, most of the cameras employed in monitoring systems contain some kind of light source, such as an LED, a flashlight or the like. For illuminating an environment, such as spaces, rooms or buildings, there exist countless types of lamps or lighting fixtures. On the other hand, for monitoring applications, there exist countless types of cameras.

Typically, (overhead) lamps and cameras have been installed separately. This reduces the available installation space and even the feasibility of the installation and renders the installation of both cameras and lamps more complex. The wiring must be provided for supplying power and for communication purposes, such as exchanging data with an external processing and control unit. Moreover, a separate wiring for both the lamps and cameras is required. Furthermore, installation often requires a high level of training for the workers to install the monitoring system. So far, there has not yet been a combination of overhead lamps and cameras.

Moreover, typically, employing a large number of cameras in a large space or room for monitoring purposes generates a large amount of image data that needs to be transmitted from the cameras to an external processing unit for processing the image data for image recognition. Furthermore, if a movement of the cameras should be controlled based on the result of image processing, control signals must be transmitted back to the cameras from the processing unit, which increases complexity of the communication between the cameras and the processing units and further increases requirements to the communication bandwidth.

### Summary of the Invention

It is an object of the present invention to provide a lamp module that allows for combined monitoring and illumination of an environment of the lamp module.

It is an object of the present invention to provide a lamp module that allows for improved and easier deployment as well as a simple installation of the lamp module including a capturing unit, such as a camera, and a monitoring system with the lamp module in a building, space or room.

It is an object of the present invention to provide a lamp module that improves wiring of the lamp module.

It is an object of the present invention to provide a lamp module that reduces an amount of data that needs to be transmitted from the lamp module to a processing unit.

It is an object of the present invention to provide a lamp module that allows for easier and/or faster processing of image data captured by a capturing unit.

It is an object of the present invention to provide a lamp module that allows automatic movement of a capturing unit, such as a camera, and/or automatic adjustment of illumination based on the image processing result and/or based on what happens in the environment of the lamp module.

It is a further object of the present invention to provide a monitoring system including the lamp module.

The present invention is based on the finding that providing lamps separate to capturing units, such as cameras, and that processing image data remote to the capturing unit, is disadvantageous.

The present invention is based on the central idea that, in addition to providing lighting, further elements and functions, such as a capturing unit and a processing unit, may be included into one lamp module. Thereby, usage of installation space is optimized. Furthermore, wiring is facilitated and requirements to communication are lowered.

At least one of these objects is solved by the subject-matter of the independent claims. Refinement and advantageous embodiments are the subject-matter of the respective dependent claims.

According to a first aspect of the present disclosure, a lamp module includes: at least one illumination module configured to illuminate an environment of the lamp module, at least one capturing unit configured to capture image data of the environment, and a processing unit configured to perform image processing on the captured image data, and based on a result of the image processing, control the illumination module, and/or control the capturing unit and/or communicate with a central processing unit of a monitoring system including the lamp module and/or communicate with a processing unit of another lamp module of the monitoring system.

According to a second aspect of the present disclosure, a monitoring system includes at least one lamp module according to aspects of the present disclosure. Preferably, the monitoring system includes at least two lamp modules according to aspects of the present disclosure. The monitoring system may include a central processing unit. By providing a processing unit in each lamp module, one central processing unit of the monitoring system is sufficient.

The aspects of the present disclosure may include one or several of the following optional features.

The environment of the lamp module may be referred to as surrounding and may be a space, room or building in which the lamp module is installed or located in. The environment may be a store, a grocery store, a supermarket, a shopping mall, a storehouse or the like. The environment may include objects such as walls, furniture, shelves, machines or persons and so on. The illumination module may be configured to illuminate or light the environment by emitting light with a predetermined wavelength or within a predetermined wavelength range.

The capturing unit may capture image data of the environment by sensing light emitted or reflected by the environment and/or objects with a predetermined wavelength or within a predetermined wavelength range. The image data may include one or several images or pictures captures at predetermined respective points of time and/or within a predetermined period of time. The image data may also include an image stream, a video stream, a video or the like. The video stream or the video may also include sound captured by the capturing unit in addition to the image data. The capturing unit may continuously capture the image data.

The processing unit and/or the central processing unit may include at least one chip or microcontroller. The central processing unit may also be referred to as master processing unit.

The present disclosure allows for customizing the number of illumination modules and/or the number of capturing units according to the specific need or application. In particular, the lamp module may include two illumination modules and two or four capturing units. The capturing unit may be configured to transmit the captured image data to the processing unit, and the processing unit may be configured to receive the captured image data.

Communicating with the central processing unit and/or the processing unit of the other lamp module may include exchanging, i.e. transmitting and/or receiving, communication data. The communication data may include the image data captured by the capturing unit and/or processed data and/or control signals. Processed data may be based on or include the image data which was further processed by the processing unit and/or the result of the image processing performed by the processing unit. The control signals may include instructions for the processing unit to control the control the illumination module and/or control the capturing unit.

Communicating with the central processing unit or the processing unit of the other lamp module may include transmitting the result of the image processing from the processing unit of the lamp module to the respective processing unit and/or may also include transmitting at least a part of the image data captured by the capturing unit of the lamp module and/or may include receiving control signals from the central processing unit and/or the processing unit of the other lamp module.

The at least one capturing unit may be movably arranged. The lamp module may further comprise at least one positioning device configured to move the at least one capturing unit. Moving the capturing unit may include adjusting a position and/or an orientation of the capturing unit. A position of the capturing unit may refer to a position of the capturing unit with respect to a three-dimensional coordinate system stationary with respect to the lamp module and/or the environment of the lamp module. An orientation of the capturing unit may refer to a rotation angle of the capturing unit around a rotation axis, in particular, a coordinate axis of the three-dimensional coordinate system. The processing unit may be configured to control the positioning device based on the result of the image processing to adjust the position and/or the orientation of the capturing unit. This allows for automatic movement of the capturing unit. This can reduce the total number of capturing units required for completely capturing the environment.

The positioning device may be configured to adjust orientation of the capturing unit with respect to a central axis of the lamp module. The positioning device may be configured to rotate the capturing unit around the central axis and/or to rotate the capturing unit with respect to at least one direction perpendicular to the central axis. The positioning device may also be configured to adjust a position along the central axis of the lamp module. The positioning device may include at least one motor, such as a servo motor, and/or at least one hinge.

The lamp module may comprise one positioning device for positioning each capturing unit. Alternatively, the lamp module may comprise one positioning device for positioning all capturing units of the lamp module.

The at least one capturing unit may comprise at least one first capturing unit configured to sense visible light to capture visible image data of the environment and/or at least one second capturing unit configured to sense infrared light to provide infrared image data of the environment and/or at least one third capturing unit configured to sense ultraviolet light to provide ultraviolet image data of the environment.

The capturing unit may be configured to capture the environment illuminated by the illumination module. The capturing unit may be configured to capture the environment at the same time the illumination module illuminates the environment.

The capturing unit may include at least one of the following: an image sensor, a camera, a camera sensor, an optical system, at least one optical element, a lens, a zoom lens. The illumination module may be a light source. The illumination module may include at least one of the following: at least one LED, an LED strip, a neon tube, a fluorescent tube, a strip light.

The image processing performed by the processing unit based on the captured image data may include object recognition. The object recognition may be performed using a neuronal network. Thereby, the purchasing behavior of customers in a shopping mall may be investigated or the manufacturing process in a factory may be monitored.

The processing unit may be configured to control the illumination module and/or the capturing unit and/or the positioning device based on the result of the object recognition. This allows an automatic movement of the capturing unit to follow and monitor what happens in the environment of the lamp module.

The processing unit may be configured, based on the result of the image processing, to control the at least one illumination module to adjust a brightness of the illumination module and/or to adjust a wavelength or a wavelength range of the light emitted by the illumination module and/or to adjust an emission angle and/or to switch on or off the illumination module and/or to adjust a color of the light emitted by the illumination module. The brightness of the illumination module may indicate a luminous flux and/or a radiant flux generated by the illumination module by emitting light. Switching on the illumination module may indicate changing a state of the illumination module in which the illumination module does not emit light to a state of the illumination module in which the illumination module does emit light. Switching off the illumination module may refer to the reverse change of state. This allows for an automatic adjustment of the illumination of the environment.

The processing unit may be configured, based on the result of the image processing, to control the capturing unit to adjust a sensitivity of the capturing unit with respect to a certain wavelength or wavelength range, in particular the wavelength or wavelength range of the light emitted by the illumination module, and/or to adjust a focal length of the capturing unit and/or to adjust a field of view of the capturing unit and/or to adjust a zoom level of the capturing unit and/or to adjust a resolution of the capturing unit and/or to adjust a compression level and/or a resolution of the captured image data and/or an image quality of the image data transmitted to the processing unit and/or to switch on or off the capturing unit. Hence, the image quality may be adjusted, such as increased, when the processing unit detects that something of interest is happening the environment.

The processing unit may be configured to monitor a behavior of a person present in the environment and/or or to monitor a manufacturing process performed in the environment. The processing unit may be configured to recognize articles present in a shelf in a store, and/or may be configured to recognize if an article is missing from a shelf in a store.

The processing unit may be configured to detect when a person moves through the environment. The processing unit may be configured to control the positioning device to move the capturing unit to maintain the person within the field of view of the capturing unit when the person moves through the environment. The processing unit may be configured to control the at least one positioning device to keep the persons within the field of view of at least one of the capturing units. Furthermore, the processing unit may control the at least one capturing unit to adjust their zoom level to keep the person within their field of view. Also, the processing unit may be configured to control the at least one illumination module to increase brightness of the light emitted thereby to help the person finding their way through the environment. The processing unit may also be configured to control the at least one illumination module to change a color of the emitted light to guide the person through the environment.

The processing unit may be configured to detect when a person, such as a customer, removes an article from the shelf in the store and/or when the person puts the article in a shopping cart and/or in a bag. The processing unit may be configured to switch on or increase brightness of an illumination module that is configured to illuminate the portion of the shelf from which the article is missing, or from which the article is being removed, for example, so as to aid the customer when shopping and/or draw attention to when an article is being stolen.

The processing unit may be configured to adjust the image quality of the capturing unit based on the position and/or orientation of the capturing unit. Hence, the picture quality may be adjusted depending on the angle of the capturing unit. This can improve the object recognition performed by the processing unit.

The at least one illumination module may comprise at least one first illumination module configured to illuminate the environment with visible light, i.e. light in the visible wavelength range, and/or at least one second illumination module configured to illuminate the environment with infrared light, i.e. light in the infrared wavelength range, and/or at least one third illumination module configured to illuminate the environment with ultraviolet light, i.e. light in the ultraviolet wavelength range. The at least one illumination module may comprise at least one first illumination module configured to emit visible light and/or at least one second illumination module configured to emit infrared light and/or at least one third illumination module configured to emit ultraviolet light. Additionally, or alternatively, one illumination module may be configured to emit light in several wavelength ranges, comprising at least two of the visible wavelength range, the infrared wavelength range and the ultraviolet range.

The lamp module may include at least one pair of connection ports. Within this disclosure "connection port" may be used interchangeably with "connector". A connection port may refer to a socket or a plug. The pair of connection ports may include a first connection port and a second connection port. By connecting the lamp modules using the connection ports, the lamp modules are able to communicate with each other and/or exchange or transmit electrical power. The connection ports of two lamp modules may be connected to each other by being directly connected to each other or by a cable connected to each connection port.

Each connection port may provide an interface for connecting the lamp module to another lamp module. The interface may include a physical or mechanical interface and/or an electrical interface, in particular a wired electrical interface. Each connection port may conform to a standard and/or may be selected from one of the following: an Ethernet port, a Power over Ethernet (PoE) port, a RJ45 port, a serial port, a USB port, a RS232 port. The processing unit may be configured to communicate with the central processing unit and/or the processing unit of another lamp module via at least one of the pair of connection ports. Each connection port may be configured to transmit data and/or power. Hence, a single connector may provide the interface for power and communication. The connection port allows for a simple installation of the lamp module. This is an important factor for the end customers because it reduced the installation effort and does not require highly educated personal.

The lamp module may further include a power distribution unit. The power distribution unit may be configured to receive power from at least one of the pair of connection ports. The power distribution unit may be configured to transmit the received power. The power distribution unit may be configured to transmit and/or distribute the received power to at least one of the processing unit, the capturing unit, and the illumination module. The power distribution unit may be configured transmit the power received from the one connection port to the other one of the pair of connection ports. The power distribution unit may be provided as or may include at least one cable or wiring or at least one pair of cable or wiring. The power distribution unit may further include a power transistor and/or a processing unit, such as a chip or microcontroller. The power distribution unit may be configured to connect the processing unit, the capturing unit, and/or the illumination module to an external electrical power source.

The lamp module may further include a communication unit. The communication unit may be configured to connect the processing unit to at least one of the pair of connection ports. Thereby, the communication unit may enable the processing unit to communicate with a processing unit of another lamp module and/or the central processing unit. The communication unit may include at least one cable or wiring or at least one pair of cable or wiring. The communication unit may further include a processing unit, such as a chip or microprocessor.

The processing unit of the communication unit and the processing unit of the lamp module may be both provided on a motherboard of the lamp module.

Moreover, the communication unit may comprise a wireless connection unit. The wireless connection unit may be configured to connect to a wireless connection unit of another lamp module or a wireless connection unit of the central processing unit. Thereby, the wireless connection unit may enable the processing unit to wirelessly communicate with a processing unit of another lamp module and/or the central processing unit. The wireless connection unit may provide a Wifi and/or Bluetooth and/or mobile connection.

The lamp module includes or is provided as one of the following: a pendant lamp, a rail lamp, a suspended ceiling fixture, a suspended lamp, a lighting fixture. The lamp module may have an elongated shape and/or may have rail shape or a rod shape. A central axis of the lamp module may be parallel to an elongated direction or extending direction of the lamp module.

One illumination module may be separated by another illumination module by at least one capturing unit with respect to a central axis of the housing or the lamp module. For example, one illumination module, two capturing units, one further illumination module and two further capturing units may be arranged in this order along the central axis of the lamp module.

The lamp module may further comprise a housing. The at least one illumination module and the at least one capturing unit may be arranged within the housing. The lamp module may further comprise a cover. The cover may be integrally formed with the cover and/or the housing may be constituted by the cover. The illumination module may be configured to illuminate the environment through the at least one cover and the capturing unit may be configured to capture the environment through the at least one cover. The cover may be provided as or may include a one-way mirror. The cover may be reflective for light from outside of the lamp module, i.e. the light emitted or reflected from the environment, and may be transparent for light from the inside, i.e. light emitted by the illumination module. The capturing unit may be hidden from the person. This has the advantage that the capturing unit is not visible to a person present in the environment of the lamp module.

In the monitoring system, the at least two lamp modules may be connected to each other in series (daisy-chained). The at least two lamp modules may be connected to each other via respective ones of the connection ports, which may be RJ45 ports or Ethernet ports. The at least two lamp modules may be mechanically and or electrically connected in series. For example, the lamp modules may be connected to each other in series via Ethernet. This provides an all-in-one daisy-chain Ethernet connection. The lamp modules may be configured to perform communication to the central processing unit in series.

The processing units of the lamp module may be configured to perform object recognition based on a knowledge data base. The processing unit may be configured to receive the knowledge data base from the central processing unit.

The monitoring system may include the central processing unit. The lamp modules may be connected to the central processing unit via Ethernet. The central processing unit may be connected to a connection port of one of the two lamp modules. Furthermore, one of the two lamp modules may be connected to an external power source to receive power. The central processing unit may be configured to communicate with the processing unit of each of the lamp modules of the monitoring system. Communicating with a processing unit may include receiving the result of the image processing from the respective processing unit and/or may also include receiving at least a part of the image data captured by the capturing unit of the lamp module and/or may include transmitting the control signals to the processing unit.

According to an embodiment, the at least one pair of connection ports may include a first pair of connection ports and a second pair of connection ports, and the at least one capturing unit may include at least one first capturing unit and at least one second capturing unit. The processing unit may be configured to transmit first communication data, which is based on the image data captured by the first capturing unit and/or a processing result obtained by processing said imaging data via at least one of the first pair of connection ports. The processing unit may be further configured to transmit second communication data, which is based on the image data captured by the second capturing unit and/or a processing result obtained by processing said imaging data via at least one of the second pair of connection ports.

Each lamp module of the monitoring system may include the first pair and the second pair of connection ports. The lamp modules of the monitoring system may be connected in series via both of the pairs of connection ports. This allows for a dual channel concept. One channel may be formed by the series connection via one of the pairs of connection ports. According to this dual channel concept, each capturing unit of each lamp module is connected to one of the two channels. This allows double bandwidth for the same number of cameras in use. The number of channels can even be increased if high bandwidth is required, depending on the number of cameras in use.

### Brief description of the drawings

In the following, embodiments of the present disclosure will be described in reference to the drawings. The figures show:
- Fig. 1: a lamp module according to embodiments of the present disclosure;
- Fig. 2: a lamp module according to further embodiments of the present disclosure;
- Fig. 3: a monitoring system according to embodiments of the present disclosure;
- Fig. 4: a lamp module according to further embodiments of the present disclosure;
- Fig. 5: a lamp module according to further embodiments of the present disclosure.

### Detailed description of embodiments

In the following description, same reference signs indicate same or corresponding elements.

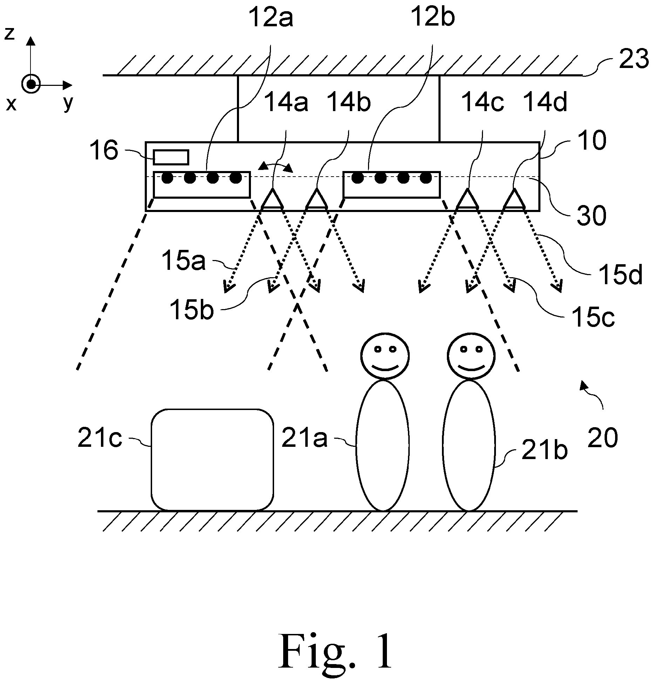

Fig. 1 shows a lamp module according to embodiments of the present disclosure.

The lamp module 10 includes at least one illumination module configured to illuminate an environment 20 of the lamp module 10, at least one capturing unit configured to capture image data of the environment 20. As shown in Fig. 1, the lamp module 10 includes two illumination modules 12a,b and four capturing units 14a-d. The lamp module 10 further includes a processing unit 16 configured to perform image processing based on the image data captured by the capturing units 14a-d. The processing unit 16 is further configured to control the capturing units 14a-d and/or the illumination modules 12a,b based on the result of the image processing.

The environment 20 of the lamp module 10 comprises one or several objects, for example, two persons 21a,b and a machine 21c. The environment 20 may be, for example, a space or room of a factory or a supermarket, in which the lamp module 10 is installed.

The lamp module 20 is provided as a pendant lamp which hangs from a ceiling 23. The lamp module 20 may also be directly mounted to the ceiling 23. The lamp module 20 has an elongated shape which extends along or parallel to the surface of the ceiling 23. The lamp module 20 has a central axis 30 which extends parallel to the extending direction of the lamp module 20. As shown in Fig. 1, the central axis extends along the coordinate axis y of the cartesian coordinate system x-y-z.

The illumination modules 12a,b are configured to illuminate the environment 20 by emitting light in the visible wavelength range. The illumination modules 12a,b may each include a light source such as an LED strip or the like.

The capturing units 14a-d capture image data of the environment 20 by sensing light emitted or reflected with a predetermined wavelength or within a predetermined wavelength range by the environment 20 and/or objects, such as the persons 21a,b and the machine 21c. For example, the capturing units 14a-d may include a camera and an optical system, such as a zoom lens, and the capturing units 14a-d may capture still images or a video stream, which may include sound. The capturing units 14a-d each are connected to the processing unit 16 and transmit the captured image data to the processing unit 16. Each capturing unit has a respective field of view 15a-d, which is determined by the orientation of the capturing unit 14a-d as well as the configuration of the optical system, in particular the zoom level.

The capturing units 14a-d are each movably arranged. This is illustrated by the double arrow at the capturing unit 14a. To move each of the capturing units 14a-d, the lamp module 10 comprises respective positioning devices (not shown). Each positioning device is configured to adjust an orientation of a respective one of the capturing units 14a-d. An orientation of a capturing unit 14a-d may be defined based on the rotation angle of the capturing unit 14a-d around a rotation axis. For example, each of the capturing units 14a-d may be rotated around the y-axis, which is parallel to the central axis 30, and may be rotated around an axis which is parallel to the x-axis, and may be rotated around an axis which is parallel to the z-axis. The processing unit 16 is configured to control the positioning devices based on the result of the image processing to adjust the orientation of the capturing units 14a-d.

The processing unit 16 may include a microcontroller. The processing unit 16 is configured to perform object recognition. An object recognition software may be executed by the microcontroller.

The processing unit 16 may be configured to monitor a behavior of the persons 21a,b present in the environment 20. For example, the processing unit 16 may be configured to recognize when one or both persons 21a,b moves through the environment 20. The processing unit 16 may be configured to control the positioning device of one or several of the capturing units 14a-d to keep the persons 21a,b within the field of view 15a-d of at least one of the capturing units 14a-d. Furthermore, the processing unit 16 may control at least one of the capturing units 14a-d to adjust their zoom level to keep the person 21a,b within their field of view. Also, the processing unit 16 may be configured to control at least one of the illumination modules 12a,b to increase brightness of the light emitted thereby to help the persons 21a,b finding their way through the environment 20. The processing unit 16 may also be configured to control at least one of the illumination modules 12a,b to change a color of the emitted light emitted to guide the persons 21a,b through the environment 20.

Thereby, the processing unit 16 may also monitor the purchasing behavior of the persons 21a,b in a supermarket. The processing unit 16 may detect when the persons 21a,b remove an article from a shelf (not shown) and control the capturing devices 14a-d, the illumination modules 12a,b and the positioning devices correspondingly.

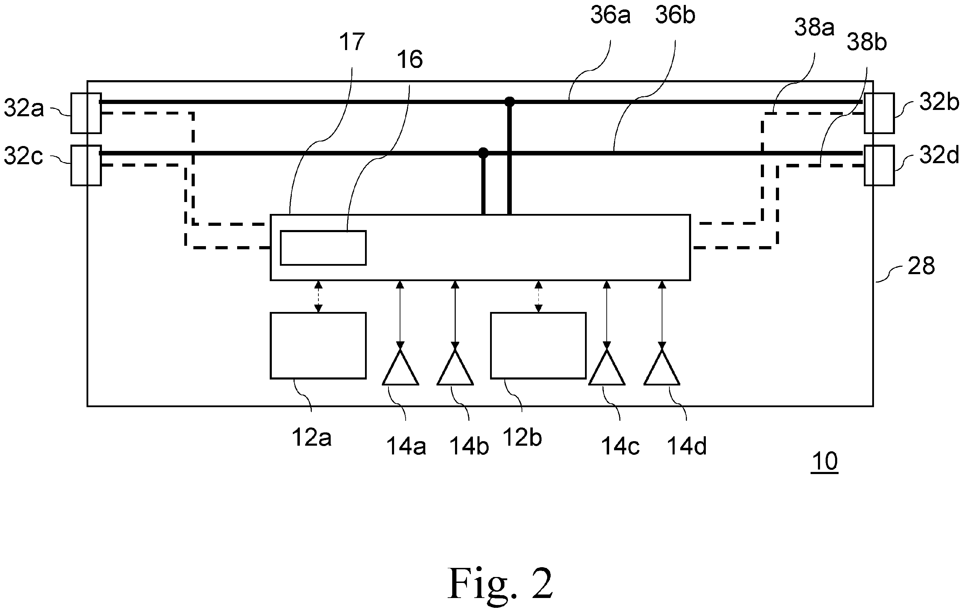

Fig. 2 shows a lamp module according to further embodiments of the present disclosure. The lamp module shown in Fig. 2 may be the lamp module 10 shown in Fig. 1.

The lamp module 10 includes a housing 28. The illumination modules 12a,b and the capturing units 14a-d are arranged within the housing 28. Furthermore, the processing unit 16 is arranged within the housing 28. The processing unit 16 may be provided on a motherboard 17.

The capturing units 14a-d are connected to the processing unit 16, illustrated by the double arrows between the capturing units 14a-d and the motherboard 17 in Fig. 2. The capturing units 14a-d send the captured image data to the processing unit 16. The processing unit 16 controls the capturing units 14a-d. Moreover, the capturing units 14a-d may be provided with power via the motherboard 17.

The illumination modules 12a,b are also connected to the processing unit 16, illustrated by dashed double arrows in Fig. 2. The illumination modules 12a,b are also controlled by the processing unit 12. The illumination modules 12a,b are provided with power by the power distribution unit described in more detail below, or may be provided by a separate power cable from an external power source.

The lamp module 10 includes two pairs of connections ports. A first pair of connection ports includes a first connection port 32a and a second connection port 32b, and a second pair of connections ports includes connection ports a first connection port 32c and a second connection port 32d. As shown, the two connection ports of each pair of connection ports are arranged at opposite ends of the lamp module 10 or the housing 28. In particular, the two connection ports of each pair of connection ports may be arranged at the opposite ends of the housing 28 along the central axis (not shown in Fig. 2).

Each connection port 32a-d provides an interface for connecting the lamp module 10 to another lamp module of a monitoring system which is described later in more detail. By connecting the lamp module 10 using the connection ports 32a-d, the lamp module 10 is enabled to communicate with the other lamp module 10 and electrical power may be transmitted between the lamp modules. For example, the connection ports 32a-d may be RJ45 ports.

The lamp module 10 includes at least one power distribution unit 36. The power distribution unit 36 allows the processing unit 16 and the capturing units 14a-d to receive electrical power from an external power source. Furthermore, the power distribution unit 36 allows for power to be transmitted between the lamp modules when the lamp module 10 is connected to another lamp module in a monitoring system.

As shown, the lamp module 10 includes a first power distribution unit 36a connected to the first pair of connecting ports 32a,b, and a second power distribution unit 36b connected to the second pair of connection ports 32c,d. Providing two power distribution units 36a,b provides redundancy. However, the second power distribution unit 36b may be omitted. In the following, the description is directed to the first power distribution unit 36a, but correspondingly applies to the second power distribution unit 36b.

As shown the first power distribution unit 36a is connected to each of the first and second connection ports 32a,b of the first pair of connection ports and is composed of or includes one or several cables or wiring, illustrated by solid lines. The first power distribution unit 36a receives power from or via at least one of the connection ports 32a,b and transmits or distributes the received power to the motherboard 17. The capturing devices 14a-d receive power via the motherboard 17, or may be directly connected to the first power distribution unit 36a. The first power distribution unit 36 further distributes the received power to the other one of the connections ports 32a,b to further transmit power to a lamp module (not shown) connected to said connection port. The power distribution unit 36a may further include a processing unit or a power transistor (not shown), which may provide further functions, such as power conversion.

The lamp module 10 further includes a communication unit 38. The communication unit 38 enables the processing unit to communicate with the central processing unit of the monitoring system and the processing unit of another lamp module of the monitoring system. For example, the communication unit 38 may enable communication via Ethernet. As shown, the lamp module 10 includes a first communication unit 38a connected to the first pair of connecting ports 32a,b, and a second communication unit 38b connected to the second pair of connection ports 32c,d. In the following, the description is directed to the first communication unit 38a, but correspondingly applies to the second communication unit 38b.

The first communication unit 38a connects the processing unit 16 to at least one connection port of the pair of connection ports 32a,b. The first communication unit 38a may include at least one cable or wiring, illustrated as dashed lines in Fig. 2.

The first communication unit 38a may further include a first communication IC (not shown), which may be provided on the motherboard 17. The second communication unit 32b may also include a second communication IC (not shown). Alternatively, one single communication IC may be used for communication of the processing unit 16 via the first communication unit 38a, and the second communication unit 38b.

Here, the processing unit 16 may be configured to transmit first communication data, which is based on the image data captured by the capturing units 14a,b via at least one of the first pair of connection ports 32a,b. The processing unit 16 may be further configured to transmit second communication data, which is based on the image data captured by the capturing units 14c,d via at least one of the second pair of connection ports 32c,d.

This allows for a dual channel concept when the lamp module 10 is connected in series with other lamp modules as further described below in detail.

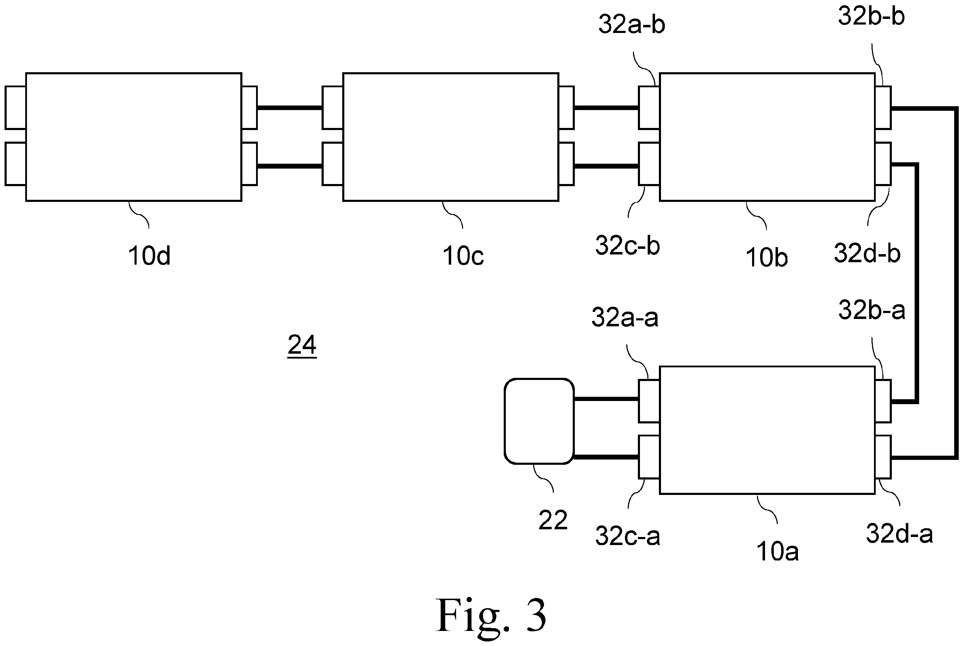

Fig. 3 shows a monitoring system according to embodiments of the present disclosure.

The monitoring system 24 includes a plurality of lamp modules 10a-d. As shown, the monitoring system 24 includes four lamp modules 10a-d. Each lamp module 10a-d may be a lamp module according to embodiments of the present disclosure, for example as shown in Fig. 1 and Fig. 2. Furthermore, the monitoring system 24 includes a central processing unit 22.

Internally, the connection ports of each of the lamp modules 10a-d may be connected as shown in Fig. 2.

Each lamp module 10a-d of the monitoring system 25 may include the first pair and the second pair of connection ports as shown in Fig. 2. The lamp modules 10a-d are connected in series via their respective connection ports. The lamp modules 10a-d are connected together in series via cables. The lamp modules 10a-d are daisy-chained. For example, the second connection port 32b-a of the first pair of connection ports of the lamp module 10a is connected to the second connection port 32d-b of the second pair of connection ports of the lamp module 10b. Moreover, the second connection port 32d-a of the second pair of connection ports of the lamp module 10a is connected to the to the second connection port 32b-b of the first pair of connection ports of the lamp module 10b.

Moreover, the first connection port 32a-a of the first pair of connection ports of the lamp module and the first connection port 32c-a of the second pair of connection ports of the lamp module 10a are connected to the central processing unit 22. Hence, the daisy-chained lamp modules 10a-d are connected to the central processing unit 22 via the lamp module 10a.

In Fig. 3, two connections are shown between two of the lamp modules 10a-d and between the lamp module 10a and the central processing unit 22. The lamp modules 10a-d of the monitoring system 24 are connected in series via both of the pairs of connection ports. This allows for the dual channel concept. Each channel is formed by the series connection via a respective one of the pairs of connection ports of each lamp module 10a-d. According to this dual channel concept, each capturing unit 14a-d of each lamp module 10a-d is connected to one of the two channels. This allows double bandwidth for the same number of cameras in use. The number of channels can even be increased if high bandwidth is required, depending on the number of cameras in use.

However, only one connection between two lamp modules 10a-d may be sufficient. Each connection port of each lamp module 10a-d is configured to transmit both power and communication data. Hence, only a single connection port is required for providing an interface for power and communication.

Therefore, the processing unit of each of the lamp modules 10a-d can communicate with the central processing unit 22 and with the processing unit of each lamp module 10a-d. Moreover, power may be distributed from a power source to each of the lamp modules 10a-d. The power source (not shown) may be connected to the central processing unit 22, and the power is transmitted from the power source to the daisy-chained lamp modules 10a-d via the central processing unit 22, or the power source may be connected to one of the free connection ports of lamp module 10d.

Hence, the connection ports allows for a simple installation of the lamp modules 10a-d in an environment. This reduces the installation effort and does not require highly educated personal.

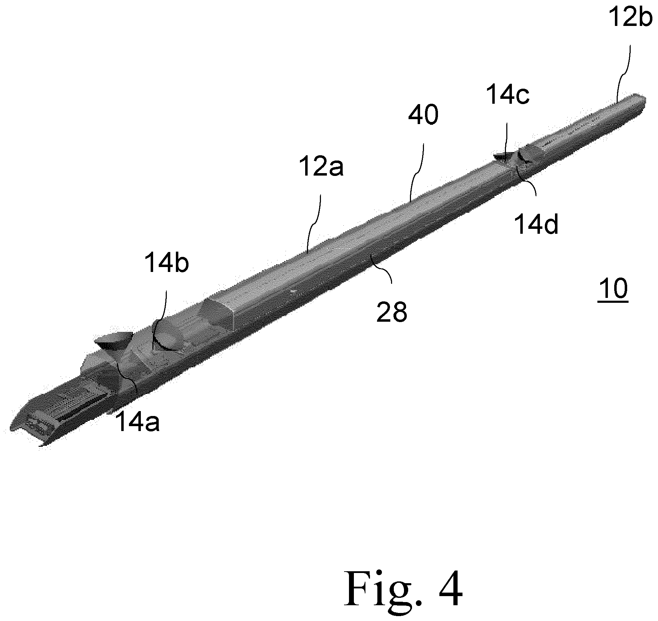

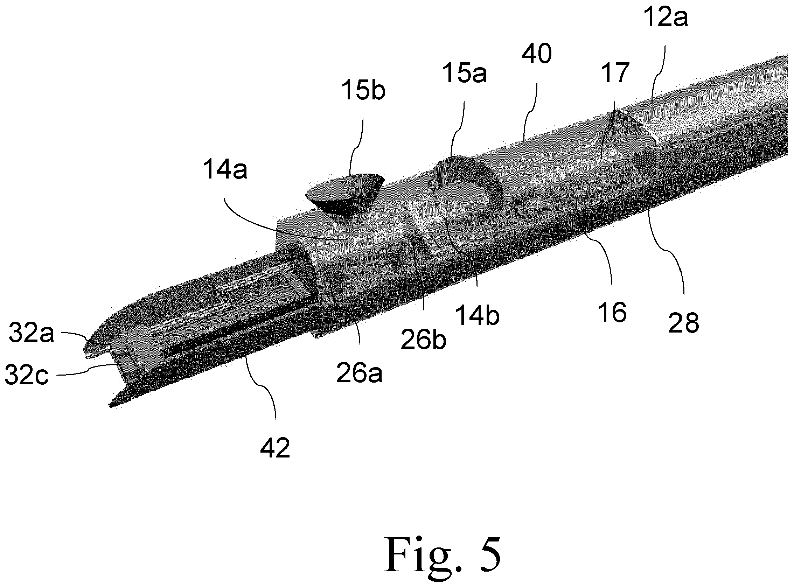

Fig. 4 is a three-dimensional view of a lamp module according to further embodiments of the present disclosure. Fig. 5 is a close-up view of a part of the lamp module. The lamp module shown in Fig. 4 may be a lamp module as shown in Figs. 1-3.

Here, the lamp module 10 has an elongated shape or a rail shape. The lamp module 10 further comprises a cover 40. The cover 40 may form at least a part of the housing 28. The cover 40 may be integrally formed with the housing 28. The cover 40 covers at least the capturing devices 14a-d. The cover 40 may also cover the illumination modules 12a,b. The end of the cover 40 adjacent to the connection ports 32a,c, the cover 40 is partially removed. The connection ports 32a,c provide an all-in-one connector for power and communication for daisy-chaining the lamp module 10 with other lamp modules.

The lamp module 10 further comprises a carrier 42 for supporting the capturing devices 14a-d and the respective positioning devices. Fig. 5 shows the positioning devices 26a,b for the capturing devices 14a,b. The carrier 42 may be a rail. The carrier 42 may also support the illumination modules 12a,b. Hence, the illumination modules 10a,b are mounted to the carrier 42. Moreover, the capturing devices 14a-d, via their respective positioning devices, are also mounted to the carrier 42. Furthermore, the processing unit 16 may be mounted to the carrier 42 via the motherboard 17.

The illumination modules 12a,b illuminate the environment through the cover 42 and the capturing units 14a-d capture the environment through the cover 42. The cover 42 may be provided as or may include a one-way mirror. Hence, the capturing units 14a-d may be hidden from persons in the environment. This has the advantage that the capturing units 14a-d re not visible to the people present in the environment of the lamp module 10.

Thus, the present invention may provide an overhead lamp which contains the light source together with cameras. The lamp is illuminating the environment while the camera is recording. This may provide the following benefits:
(1) a combined design of lamp and a light source such as LED with hidden cameras. The presence of cameras is not visible to customers.
(2) very simple installation with one single connector. This is an important factor for the end customers because it reduced the installation effort and does not require highly educated personal. A single connector provides the interface for power and communication.
(3) a microcontroller in combination with an object recognition software allows automatic camera movement to follow and monitor happenings.
(4) all in one daisy-chain Ethernet connection. All overhead lamps are connected through Ethernet in a row. The communication to a central processing unit, such as a PC, happens in series.
(5) One single master PC in combination with a microcontroller inside the lamps is sufficient.
(6) Dual Channel concept at which every second camera is connected to one LAN channel. This allows double bandwidth for the same number of cameras in use. The number of channels can get even increased if high bandwidth is required (depends on number of cameras in use).
(7) adjustment of illumination automatically by the microcontroller. The microcontroller does the picture recognition. Depending on the result this microcontroller could control the illumination.
(8) the light source wavelength may be in the visible wavelength range. Additionally for the picture recognition IR and UV light sources outside the visible range can be included.
(9) cameras can move automatically. This can reduce the number of total cameras required. At the same time the picture quality can get adjusted depending on the camera angle. This can improve the picture recognition done by the neuronal network within the camera rail.

## Claims

1. Lamp module (10), including:
at least one illumination module (12a,b) configured to illuminate an environment (20) of the lamp module (10),
at least one capturing unit (14a-d) configured to capture image data of the environment (20), and
a processing unit (16) configured to
perform image processing on the captured image data, and
based on a result of the image processing, control the illumination module (12a,b), and/or control the capturing unit (14a-d) and/or communicate with a central processing unit (22) of a monitoring system (24) including the lamp module (10).

2. Lamp module according to any one of the preceding claims, further comprising at least one positioning device (26) configured to adjust a position and/or an orientation of the at least one capturing unit, wherein the processing unit (16) is configured to control the positioning device (26) based on the result of the image processing.

3. Lamp module according to claim 2, wherein the positioning device (26a,b) is configured to rotate the capturing unit (14a-d) with respect to a central axis (30) of the lamp module and/or to rotate the capturing unit (14a-d) with respect to at least one direction perpendicular to the central axis (30).

4. Lamp module according to any one of the preceding claims, wherein the capturing unit (14a-d) includes at least one of the following: an image sensor, a camera, an optical system, at least one optical element, a zoom lens; and/or
wherein the illumination module (12a,b) includes at least one of the following: at least one LED, an LED strip, a neon tube, a fluorescent tube, a strip light.

5. Lamp module according to any one of the preceding claims, wherein the processing unit (16) is configured to perform object recognition based on the captured image data, and wherein the processing unit (16) is configured to control the illumination module (12a,b) and/or the capturing unit (14a-d) and/or the positioning device (26a,b) based on the result of the object recognition.

6. Lamp module according to any one of the preceding claims, wherein the processing unit (16) is configured, based on the result of the image processing, to control the at least one illumination module (12a,b) to adjust a brightness of the illumination module (12a,b) and/or to adjust a wavelength of light emitted the illumination module (12a,b) and/or to adjust a color of the light emitted by the illumination module (12a,b) and/or to adjust an emission angle of the illumination module (12a,b) and/or to switch on or off the illumination module (12a,b).

7. Lamp module according to any one of the preceding claims, wherein the processing unit (16) is configured, based on the result of the image processing, to control the capturing unit (14a-d) to adjust a sensitivity of the capturing unit (14a-d) with respect to a certain wavelength or wavelength range, in particular the wavelength or wavelength range of the light emitted by the illumination module (12a,b), and/or to adjust a focal length of the capturing unit (14a-d) and/or to adjust a field of view of the capturing unit (14a-d) and/or to adjust a zoom level of the capturing unit (14a-d) and/or to adjust a resolution of the capturing unit (14a-d) and/or to adjust a compression level and/or an image quality of the image data transmitted to the processing unit (16) and/or to switch on or off the capturing unit (14a-d).

8. Lamp module according to any one of the preceding claims, wherein the at least one illumination module (12a,b) comprises at least one first illumination module configured to illuminate the environment with visible light and/or at least one second illumination module configured to illuminate the environment with infrared light and/or at least one third illumination module configured to illuminate the environment with ultraviolet light.

9. Lamp module according to any one of the preceding claims, further comprising:
at least one pair of connection ports (32a,b), the pair includes a first connection port (32a) and a second connection port (32b),
a power distribution unit (36a,b) configured to receive power from one of the pair of connection ports (32a,b) and distribute the power to at least one of the processing unit (16), the capturing unit (14a-d), and the illumination module (12a,b), and/or to transmit the power received from the one connection port to the other one of the pair of connection ports (32a,b),
a communication unit (38a,b) configured to connect the processing unit (16) to at least one of the pair of connection ports (32a,b) to enable the processing unit (16) to communicate with a processing unit of another lamp module and/or the central processing unit (22).

10. Lamp module according to claim 9, wherein the at least one pair of connection ports (32a-d) includes a first pair of connection ports (32a,b) and a second pair of connection ports (32c,d),
wherein the at least one capturing unit (14a-d) includes at least one first capturing unit (14a,b) and at least one second capturing unit (14c,d),
wherein the processing unit (16) is configured to
transmit first communication data, which is based on the image data captured by the first capturing unit (14a,b) and/or a processing result obtained by processing said imaging data via at least one of the first pair of connection ports (32a,b), and
transmit second communication data, which is based on the image data captured by the second capturing unit (14c,d) and/or a processing result obtained by processing said imaging data via at least one of the second pair of connection ports (32c,d).

11. Lamp module according to any one of the preceding claims, wherein the lamp module includes or is provided as one of the following: a pendant lamp, a rail lamp, a suspended ceiling fixture, lighting fixture.

12. Lamp module according to any one of the preceding claims, wherein one illumination module is separated by another illumination module by at least one capturing unit with respect to a central axis of the housing.

13. Lamp module according to any one of the preceding claims, further comprising a housing (28), wherein the at least one illumination module (12a,b) and the at least one capturing unit (14a-d) are arranged within the housing (28), and/or
further comprising a cover (40), wherein the illumination module (12a,b) is configured to illuminate the environment through the at least one cover (40) and the capturing unit (14a-d) is configured to capture the environment through the at least one cover (40), wherein, preferably, the cover (40) is configured such that the capturing unit (14a-d) is not visible to a person present in the environment of the lamp module, and/or wherein the capturing unit (14a-d) is hidden from the person.

14. Monitoring system (24), including at least two lamp modules (10a-d) according to one of the preceding claims, wherein the at least two lamp modules (10a-d) are connected in series via respective ones of the connection ports (32a-d) and/or wherein the at least two lamp modules (10a-d) are daisy-chained.

15. Monitoring system, further including a central processing unit (22) connected to a connection port (32a-d) of one of the two lamp modules (10a-d).
